# EUROPEAN PATENT SPECIFICATION

(11) **EP 2 021 603 B1**
(45) Date of publication and mention of the grant of the patent: **01.09.2010**
(21) Application number: 07741653.5
(22) Date of filing: 09.04.2007
(51) Int. Cl.: F02D 13/02, F02D 15/04, F02D 15/00

(54) **METHOD OF CONTROLLING A SPARK IGNITION TYPE INTERNAL COMBUSTION ENGINE**
STEUERUNGSVERFAHREN EINES VERBRENNUNGSMOTORS MIT FREMDZÜNDUNG
PROCÉDÉ DE COMMANDE D'UN MOTEUR À COMBUSTION INTERNE DU TYPE À ALLUMAGE PAR ÉTINCELLE

(30) Priority: 12.05.2006 JP 2006134073
(43) Date of publication of application: 11.02.2009
(73) Proprietor: Toyota Jidosha Kabushiki Kaisha, Toyota-shi, Aichi 471-8571 (JP)
(72) Inventor: AKIHISA, Daisuke, Toyota-shi, Aichi 471-8571 (JP); SAWADA, Daisaku, Toyota-shi, Aichi 471-8571 (JP); KAMIYAMA, Eiichi, Toyota-shi, Aichi 471-8571 (JP)
(74) Representative: TBK-Patent
(86) International application number: PCT/JP2007/058217
(87) International publication number: WO 2007/132613

(56) References cited:
- EP-A- 1 526 265
- WO-A-99/50541
- DE-A1-102004 005 751
- JP-A- 2004 218 522

## Description

### TECHNICAL FIELD

The present invention relates to a method of controlling a mechanical compression ratio in a spark ignition type internal combustion engine.

### BACKGROUND ART

Known in the art is a spark ignition type internal combustion engine provided with a variable compression ratio mechanism able to change a mechanical compression ratio and a variable valve timing mechanism able to control a closing timing of an intake valve, performing a supercharging action by a supercharger at the time of engine medium load operation and engine high load operation, and increasing the mechanical compression ratio and delaying the closing timing of the intake valve as the engine load becomes lower at the time of engine medium and high load operation in the state holding the actual combustion ratio constant (for example, see Japanese Patent Publication (A) No. 2004-218522 disclosing a method according to the preamble of claim 1).

However, in this internal combustion engine, even at the time of engine low load operation, the mechanical compression ratio is made high and the closing timing of the intake valve is delayed, but whether the mechanical compression ratio is higher or lower than at the time of engine medium load operation is unclear and whether the closing timing of the intake valve is later or earlier than at the time of engine medium load operation is unclear. Further, in this internal combustion engine, whether the actual compression ratio at the time of engine low load operation is higher or lower than at the time of engine medium and high load operation is also unclear.

Further, generally speaking, in an internal combustion engine, the lower the engine load, the worse the thermal efficiency, therefore to improve the thermal efficiency at the time of vehicle operation, that is, to improve the fuel consumption, it becomes necessary to improve the thermal efficiency at the time of engine low load operation. However, in an internal combustion engine, the larger the expansion ratio, the longer the period during which a force acts pressing down the piston at the time of the expansion stroke, therefore the larger the expansion ratio, the more the thermal efficiency is improved. On the other hand, if raising the engine compression ratio, the expansion ratio becomes higher. Therefore to raise the thermal efficiency at the time of engine operation, it is preferable to raise the mechanical compression ratio at the time of engine low load operation as much as possible to enable the maximum expansion ratio to be obtained at the time of engine low load operation.

However, in the above known internal combustion engine, whether the mechanical compression ratio is being made as high as possible so as to obtain the maximum expansion ratio at the time of engine low load operation is unclear. Further, in an internal combustion engine provided with a variable compression ratio mechanism able to change a mechanical compression ratio and a variable valve timing mechanism able to control a closing timing of an intake valve, ordinarily the actual compression ratio is also made to increase when making the mechanical compression ratio increase. That is to say, usually, to make the compression ratio increase, the mechanical compression ratio is made to increase. This is because it is believed that, at this time, there is no meaning unless the actual compression ratio is increased.

However, if the actual compression ratio is increased, knocking occurs, so the actual compression ratio cannot be raised that much. Therefore, in the past, since, even if raising the mechanical compression ratio at the time of engine low load operation, the actual compression ratio could not be raised that much, the mechanical compression ratio was never made that high. As a result, in the past, there was the problem that a sufficiently high expansion ratio could not be obtained at the time of engine low load operation and accordingly a good fuel consumption could not be obtained commensurate with the increased complexity of the structure.

Further methods of controlling a mechanical compression ratio are known from EP 1 526 265 A and DE 10 2004 005 751 A.

### DISCLOSURE OF THE INVENTION

An object of the present invention is to provide a method of controlling a mechanical compression ratio in a spark ignition type internal combustion engine improved in thermal efficiency at the time of vehicle operation and giving good fuel consumption.

The above object is solved by a method of controlling a mechanical compression ratio having the features of claim 1.

### BRIEF DESCRIPTION OF THE DRAWINGS

FIG. 1 is an overview of a spark ignition type internal combustion engine.
FIG. 2 is a disassembled perspective view of a variable compression ratio mechanism.
FIG. 3 is a side cross-sectional view of the illustrated internal combustion engine.
FIG. 4 is a view of a variable valve timing mechanism.
FIG. 5 is a view showing the amounts of lift of the intake valve and exhaust valve.
FIG. 6 is a view for explaining the engine compression ratio, actual compression ratio, and expansion ratio.
FIG. 7 is a view showing the relationship between the theoretical thermal efficiency and expansion ratio.
FIG. 8 is a view for explaining an ordinary cycle and superhigh expansion ratio cycle.
FIG. 9 is a view showing the change in mechanical compression ratio etc. in accordance with the engine load.
FIG. 10 is a flowchart for operational control.
FIG. 11 is a view showing the target actual compression ratio etc.

### BEST MODE FOR CARRYING OUT THE INVENTION

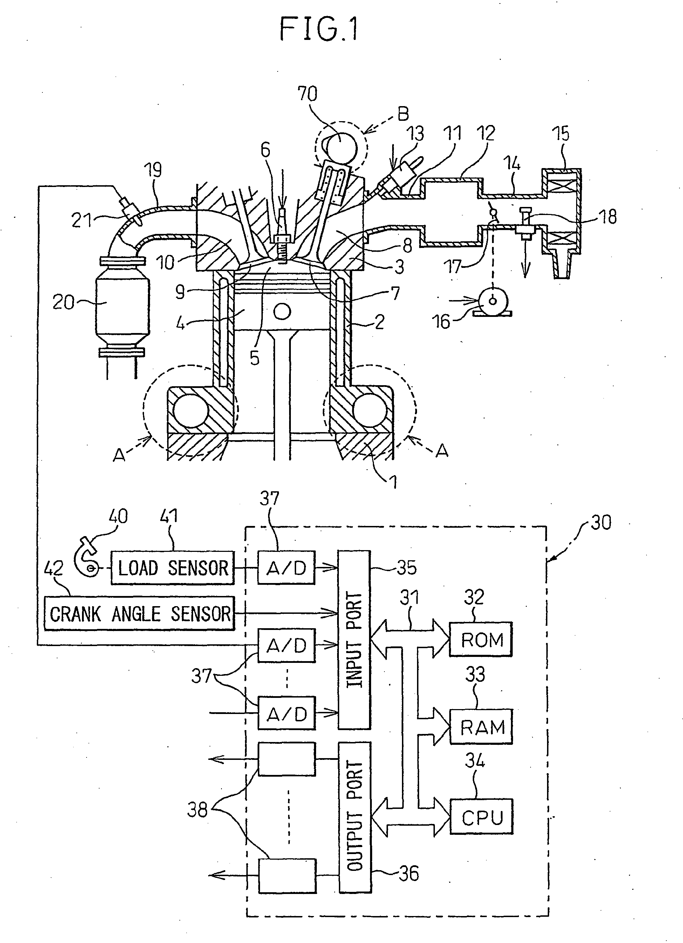

FIG. 1 shows a side cross-sectional view of a spark ignition type internal combustion engine.

Referring to FIG. 1, 1 indicates a crank case, 2 a cylinder block, 3 a cylinder head, 4 a piston, 5 a combustion chamber, 6 a spark plug arranged at the top center of the combustion chamber 5, 7 an intake valve, 8 an intake port, 9 an exhaust valve, and 10 an exhaust port. The intake port 8 is connected through an intake branch tube 11 to a surge tank 12, while each intake branch tube 11 is provided with a fuel injector 13 for injecting fuel toward a corresponding intake port 8. Note that each fuel injector 13 may be arranged at each combustion chamber 5 instead of being attached to each intake branch tube 11.

The surge tank 12 is connected through an intake duct 14 to an air cleaner 15, while the intake duct 14 is provided inside it with a throttle valve 17 driven by an actuator 16 and an intake air amount detector 18 using for example a hot wire. On the other hand, the exhaust port 10 is connected through an exhaust manifold 9 to a catalytic converter 20 housing for example a three-way catalyst, while the exhaust manifold 19 is provided inside it with an air-fuel ratio sensor 21.

On the other hand, in the embodiment shown in FIG. 1, the connecting part of the crank case 1 and the cylinder block 2 is provided with a variable compression ratio mechanism A able to change the relative positions of the crank case 1 and cylinder block 2 in the cylinder axial direction so as to change the volume of the combustion chamber 5 when the piston 4 is positioned at compression top dead center, and there is further provided with an actual compression action start timing changing mechanism B able to change a start timing of an actual compression action. Note that in the embodiment shown in FIG. 1, this actual compression action start timing changing mechanism B is comprised of a variable valve timing mechanism able to control the closing timing of the intake valve 7.

The electronic control unit 30 is comprised of a digital computer provided with components connected with each other through a bidirectional bus 31 such as a ROM (read only memory) 32, RAM (random access memory) 33, CPU (microprocessor) 34, input port 35, and output port 36. The output signal of the intake air amount detector 18 and the output signal of the air-fuel ratio sensor 21 are input through corresponding AD converters 37 to the input port 35. Further, the accelerator pedal 40 is connected to a load sensor 41 generating an output voltage proportional to the amount of depression L of the accelerator pedal 40. The output voltage of the load sensor 41 is input through a corresponding AD converter 37 to the input port 35. Further, the input port 35 is connected to a crank angle sensor 42 generating an output pulse every time the crankshaft rotates by for example 30°. On the other hand, the output port 36 is connected through the drive circuit 38 to a spark plug 6, fuel injector 13, throttle valve drive actuator 16, variable compression ratio mechanism A, and variable valve timing mechanism B.

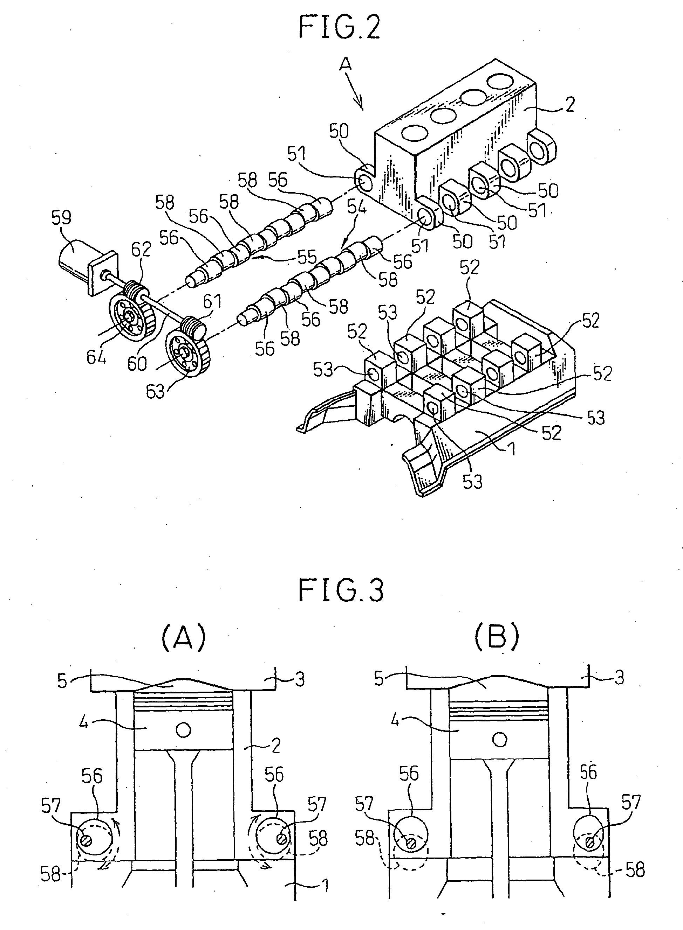

FIG. 2 is a disassembled perspective view of the variable compression ratio mechanism A shown in FIG. 1, while FIG. 3 is a side cross-sectional view of the illustrated internal combustion engine. Referring to FIG. 2, at the bottom of the two side walls of the cylinder block 2, a plurality of projecting parts 50 separated from each other by a certain distance are formed. Each projecting part 50 is formed with a circular cross-section cam insertion hole 51. On the other hand, the top surface of the crank case 1 is formed with a plurality of projecting parts 52 separated from each other by a certain distance and fitting between the corresponding projecting parts 50. These projecting parts 52 are also formed with circular cross-section cam insertion holes 53.

As shown in FIG. 2, a pair of cam shafts 54, 55 is provided. Each of the cam shafts 54, 55 has circular cams 56 fixed on it able to be rotatably inserted in the cam insertion holes 51 at every other position. These circular cams 56 are coaxial with the axes of rotation of the cam shafts 54, 55. On the other hand, between the circular cams 56, as shown by the hatching in FIG. 3, extend eccentric shafts 57 arranged eccentrically with respect to the axes of rotation of the cam shafts 54, 55. Each eccentric shaft 57 has other circular cams 58 rotatably attached to it eccentrically. As shown in FIG. 2, these circular cams 58 are arranged between the circular cams 56. These circular cams 58 are rotatably inserted in the corresponding cam insertion holes 53.

When the circular cams 56 fastened to the cam shafts 54, 55 are rotated in opposite directions as shown by the solid line arrows in FIG. 3(A) from the state shown in FIG. 3(A), the eccentric shafts 57 move toward the bottom center, so the circular cams 58 rotate in the opposite directions from the circular cams 56 in the cam insertion holes 53 as shown by the broken line arrows in FIG. 3(A). As shown in FIG. 3(B), when the eccentric shafts 57 move toward the bottom center, the centers of the circular cams 58 move to below the eccentric shafts 57.

As will be understood from a comparison of FIG. 3(A) and FIG. 3(B), the relative positions of the crank case 1 and cylinder block 2 are determined by the distance between the centers of the circular cams 56 and the centers of the circular cams 58. The larger the distance between the centers of the circular cams 56 and the centers of the circular cams 58, the further the cylinder block 2 from the crank case 1. If the cylinder block 2 moves away from the crank case 1, the volume of the combustion chamber 5 when the piston 4 is positioned as compression top dead center increases, therefore by making the cam shafts 54, 55 rotate, the volume of the combustion chamber 5 when the piston 4 is positioned as compression top dead center can be changed.

As shown in FIG. 2, to make the cam shafts 54, 55 rotate in opposite directions, the shaft of a drive motor 59 is provided with a pair of worm gears 61, 62 with opposite thread directions. Gears 63, 64 engaging with these worm gears 61, 62 are fastened to ends of the cam shafts 54, 55. In this embodiment, the drive motor 59 may be driven to change the volume of the combustion chamber 5 when the piston 4 is positioned at compression top dead center over a broad range. Note that the variable compression ratio mechanism A shown from FIG. 1 to FIG. 3 shows an example. Any type of variable compression ratio mechanism may be used.

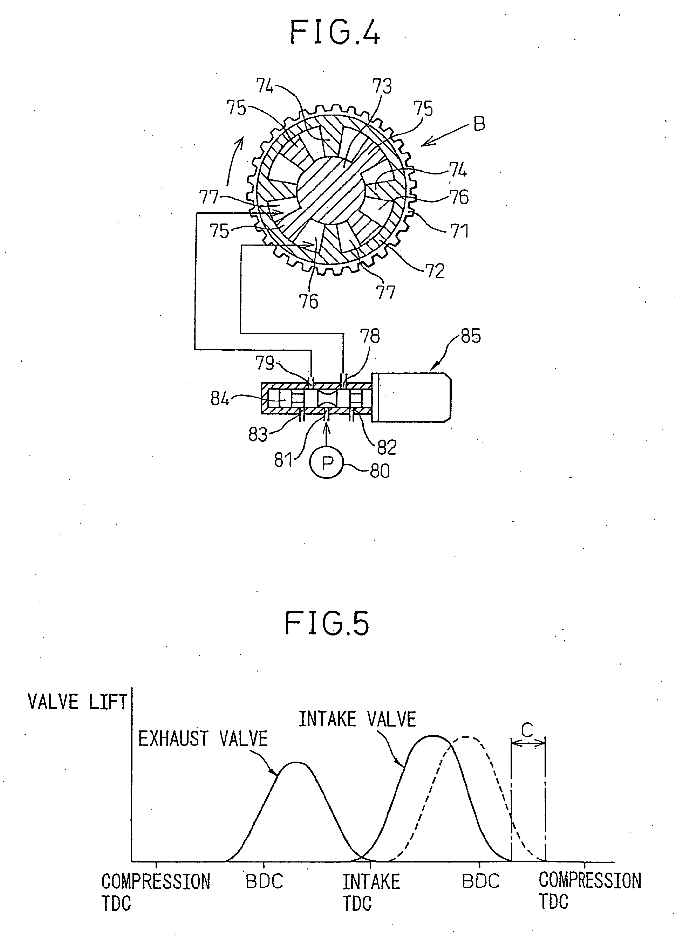

On the other hand, FIG. 4 shows a variable valve timing mechanism B attached to the end of the cam shaft 70 for driving the intake valve 7 in FIG. 1. Referring to FIG. 4, this variable valve timing mechanism B is provided with a timing pulley 71 rotated by an engine crank shaft through a timing belt in the arrow direction, a cylindrical housing 72 rotating together with the timing pulley 71, a shaft 73 able to rotate together with an intake valve drive cam shaft 70 and rotate relative to the cylindrical housing 72, a plurality of partitions 74 extending from an inside circumference of the cylindrical housing 72 to an outside circumference of the shaft 73, and vanes 75 extending between the partitions 74 from the outside circumference of the shaft 73 to the inside circumference of the cylindrical housing 72, the two sides of the vanes 75 formed with hydraulic chambers for advancing 76 and use hydraulic chambers for retarding 77.

The feed of working oil to the hydraulic chambers 76, 77 is controlled by a working oil feed control valve 85. This working oil feed control valve 85 is provided with hydraulic ports 78, 79 connected to the hydraulic chambers 76, 77, a feed port 81 for working oil discharged from a hydraulic pump 80, a pair of drain ports 82, 83, and a spool valve 84 for controlling connection and disconnection of the ports 78, 79, 81, 82, 83.

To advance the phase of the cams of the intake valve drive cam shaft 70, in FIG. 4, the spool valve 84 is made to move to the right, working oil fed from the feed port 81 is fed through the hydraulic port 78 to the hydraulic chambers for advancing 76, and working oil in the hydraulic chambers for retarding 77 is drained from the drain port 83. At this time, the shaft 73 is made to rotate relative to the cylindrical housing 72 in the arrow direction.

As opposed to this, to retard the phase of the cams of the intake valve drive cam shaft 70, in FIG. 4, the spool valve 84 is made to move to the left, working oil fed from the feed port 81 is fed through the hydraulic port 79 to the hydraulic chambers for retarding 77, and working oil in the hydraulic chambers for advancing 76 is drained from the drain port 82. At this time, the shaft 73 is made to rotate relative to the cylindrical housing 72 in the direction opposite to the arrows.

When the shaft 73 is made to rotate relative to the cylindrical housing 72, if the spool valve 84 is returned to the neutral position shown in FIG. 4, the operation for relative rotation of the shaft 73 is ended, and the shaft 73 is held at the relative rotational position at that time. Therefore, it is possible to use the variable valve timing mechanism B so as to advance or retard the phase of the cams of the intake valve drive cam shaft 70 by exactly the desired amount.

In FIG. 5, the solid line shows when the variable valve timing mechanism B is used to advance the phase of the cams of the intake valve drive cam shaft 70 the most, while the broken line shows when it is used to retard the phase of the cams of the intake valve drive cam shaft 70 the most. Therefore, the opening time of the intake valve 7 can be freely set between the range shown by the solid line in FIG. 5 and the range shown by the broken line, therefore the closing timing of the intake valve 7 can be set to any crank angle in the range shown by the arrow C in FIG. 5.

The variable valve timing mechanism B shown in FIG. 1 and FIG. 4 is one example. For example, a variable valve timing mechanism or other various types of variable valve timing mechanisms able to change only the closing timing of the intake valve while maintaining the opening timing of the intake valve constant can be used. Further, in the present invention, the variable valve timing mechanism B is used to change the start timing of the actual compression action, so even if not a variable valve timing mechanism, any form of actual compression action start timing changing mechanism can be used if an actual compression action start timing changing mechanism able to change a start timing of an actual compression action.

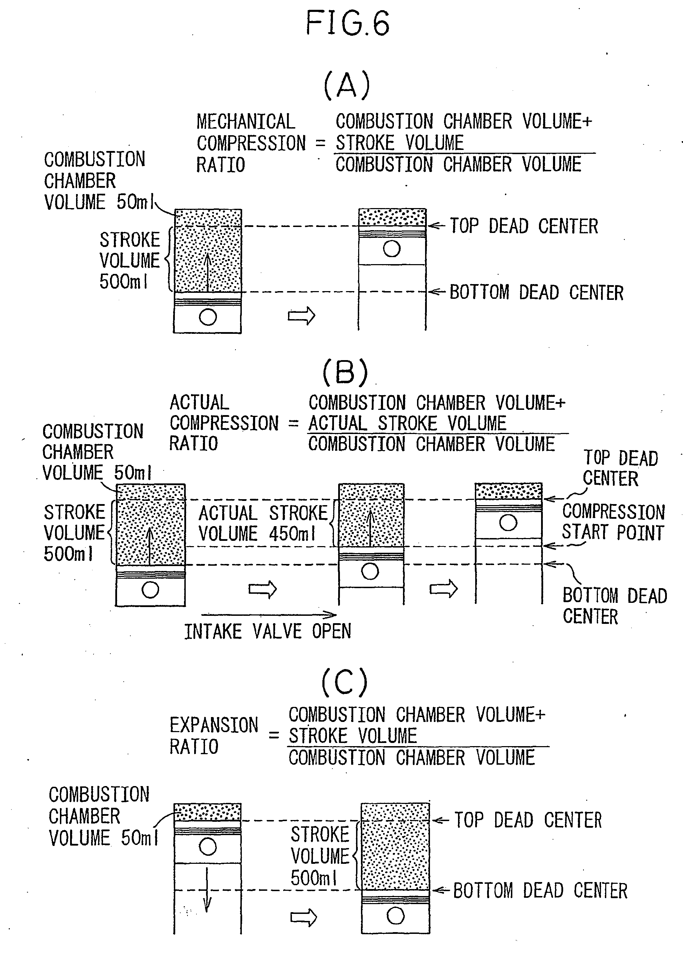

Next, the meaning of the terms used in the present application will be explained with reference to FIG. 6. Note that FIG. 6(A), (B), and (C) show for explanatory purposes an engine with a volume of the combustion chambers of 50 ml and a stroke volume of the piston of 500 ml. In these FIG. 6(A), (B), and (C), the combustion chamber volume shows the volume of the combustion chamber when the piston is at compression top dead center.

FIG. 6(A) explains the mechanical compression ratio. The mechanical compression ratio is a value determined mechanically from the stroke volume of the piston and combustion chamber volume at the time of a compression stroke. This mechanical compression ratio is expressed by (combustion chamber volume+stroke volume)/combustion chamber volume. In the example shown in FIG. 6(A), this mechanical compression ratio becomes (50 ml+500 ml)/50 ml=11.

FIG. 6(B) explains the actual compression ratio. This actual compression ratio is a value determined from the actual stroke volume of the piston from when the compression action is actually started to when the piston reaches top dead center and the combustion chamber volume. This actual compression ratio is expressed by (combustion chamber volume+actual stroke volume)/combustion chamber volume. That is, as shown in FIG. 6(B), even if the piston starts to rise in the compression stroke, no compression action is performed while the intake valve is opened. The actual compression action is started after the intake valve closes. Therefore, the actual compression ratio is expressed as follows using the actual stroke volume. In the example shown in FIG. 6(B), the actual compression ratio becomes (50 ml+450 ml)/50 ml=10.

FIG. 6(C) explains the expansion ratio. The expansion ratio is a value determined from the stroke volume of the piston at the time of an expansion stroke and the combustion chamber volume. This expansion ratio is expressed by the (combustion chamber volume+stroke volume)/combustion chamber volume. In the example shown in FIG. 6(C), this expansion ratio becomes (50 ml+500 ml)/50 ml=11.

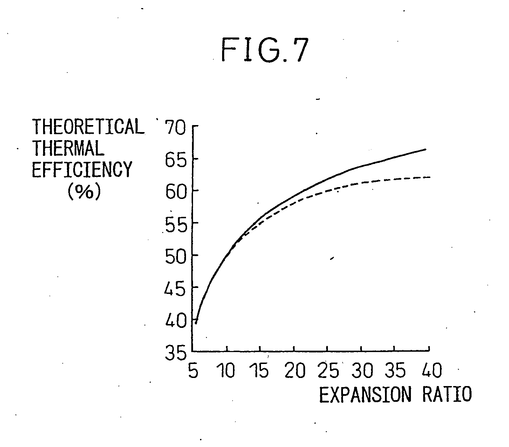

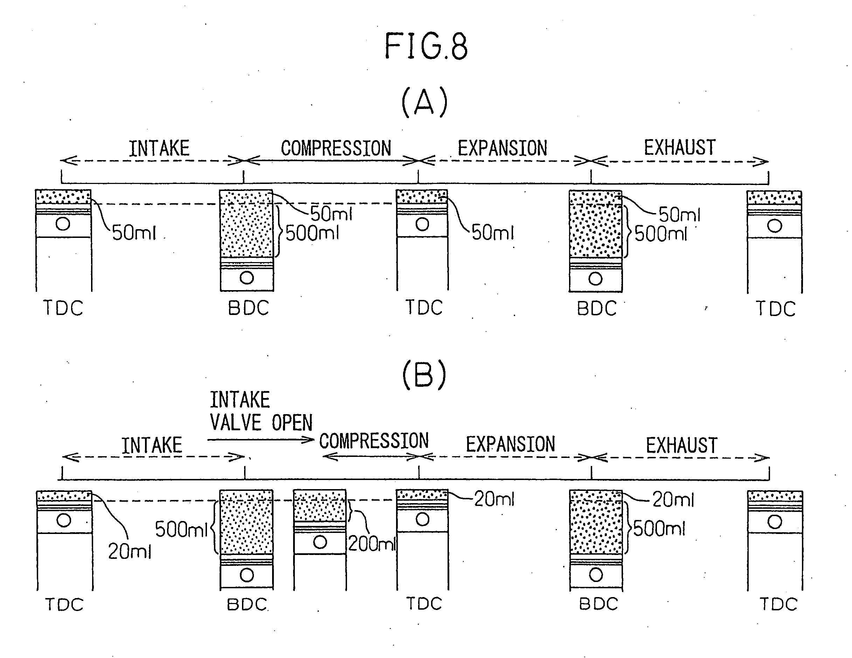

Next, the most basic features of the present invention will be explained with reference to FIG. 7 and FIG. 8. Note that FIG. 7 shows the relationship between the theoretical thermal efficiency and the expansion ratio, while FIG. 8 shows a comparison between the ordinary cycle and superhigh expansion ratio cycle used selectively in accordance with the load in the present invention.

FIG. 8(A) shows the ordinary cycle when the intake valve closes near the bottom dead center and the compression action by the piston is started from near substantially compression bottom dead center. In the example shown in this FIG. 8(A) as well, in the same way as the examples shown in FIG. 6(A), (B), and (C), the combustion chamber volume is made 50 ml, and the stroke volume of the piston is made 500 ml. As will be understood from FIG. 8(A), in an ordinary cycle, the mechanical compression ratio is (50 ml+500 ml)/50 ml=11, the actual compression ratio is also about 11, and the expansion ratio also becomes (50 ml+500 ml)/50 ml=11. That is, in an ordinary internal combustion engine, the mechanical compression ratio and actual compression ratio and the expansion ratio become substantially equal.

The solid line in FIG. 7 shows the change in the theoretical thermal efficiency in the case where the actual compression ratio and expansion ratio are substantially equal, that is, in the ordinary cycle. In this case, it is learned that the larger the expansion ratio, that is, the higher the actual compression ratio, the higher the theoretical thermal efficiency. Therefore, in an ordinary cycle, to raise the theoretical thermal efficiency, the actual compression ratio should be made higher. However, due to the restrictions on the occurrence of knocking at the time of engine high load operation, the actual compression ratio can only be raised even at the maximum to about 12, accordingly, in an ordinary cycle, the theoretical thermal efficiency cannot be made sufficiently high.

On the other hand, under this situation, the inventors strictly differentiated between the mechanical compression ratio and actual compression ratio and studied the theoretical thermal efficiency and as a result discovered that in the theoretical thermal efficiency, the expansion ratio is dominant, and the theoretical thermal efficiency is not affected much at all by the actual compression ratio. That is, if raising the actual compression ratio, the explosive force rises, but compression requires a large energy, accordingly even if raising the actual compression ratio, the theoretical thermal efficiency will not rise much at all.

As opposed to this, if increasing the expansion ratio, the longer the period during which a force acts pressing down the piston at the time of the expansion stroke, the longer the time that the piston gives a rotational force to the crankshaft. Therefore, the larger the expansion ratio is made, the higher the theoretical thermal efficiency becomes. The broken line in FIG. 7 shows the theoretical thermal efficiency in the case of fixing the actual compression ratio at 10 and raising the expansion ratio in that state. In this way, it is learned that the amount of rise of the theoretical thermal efficiency when raising the expansion ratio in the state where the actual compression ratio is maintained at a low value and the amount of rise of the theoretical thermal efficiency in the case where the actual compression ratio is increased along with the expansion ratio as shown by the solid line of FIG. 7 will not differ that much.

If the actual compression ratio is maintained at a low value in this way, knocking will not occur, therefore if raising the expansion ratio in the state where the actual compression ratio is maintained at a low value, the occurrence of knocking can be prevented and the theoretical thermal efficiency can be greatly raised. FIG. 8(B) shows an example of the case when using the variable compression ratio mechanism A and variable valve timing mechanism B to maintain the actual compression ratio at a low value and raise the expansion ratio.

Referring to FIG. 8(B), in this example, the variable compression ratio mechanism A is used to lower the combustion chamber volume from 50 ml to 20 ml. On the other hand, the variable valve timing mechanism B is used to delay the closing timing of the intake valve until the actual stroke volume of the piston changes from 500 ml to 200 ml. As a result, in this example, the actual compression ratio becomes (20 ml+200 ml)/20 ml=11 and the expansion ratio becomes (20 ml+500 ml)/20 ml=26. In the ordinary cycle shown in FIG. 8(A), as explained above, the actual compression ratio is about 11 and the expansion ratio is 11. Compared with this case, in the case shown in FIG. 8(B), it is learned that only the expansion ratio is raised to 26. This is the reason that it is called the "superhigh expansion ratio cycle".

As explained above, generally speaking, in an internal combustion engine, the lower the engine load, the worse the thermal efficiency, therefore to improve the thermal efficiency at the time of vehicle operation, that is, to improve the fuel consumption, it becomes necessary to improve the thermal efficiency at the time of engine low load operation. On the other hand, in the superhigh expansion ratio cycle shown in FIG. 8(B), the actual stroke volume of the piston at the time of the compression stroke is made smaller, so the amount of intake air which can be sucked into the combustion chamber 5 becomes smaller, therefore this superhigh expansion ratio cycle can only be employed when the engine load is relatively low. Therefore, in the present invention, at the time of engine low load operation, the superhigh expansion ratio cycle shown in FIG. 8(B) is set, while at the time of engine high load operation, the ordinary cycle shown in FIG. 8(A) is set. This is the basic feature of the present invention.

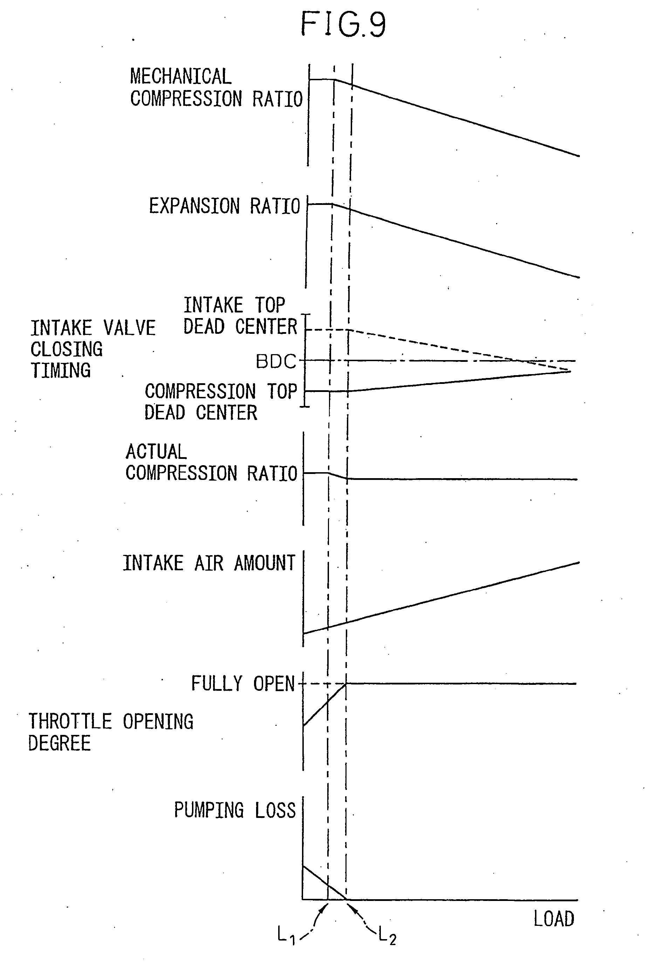

Next, the operational control as a whole will be explained with reference to FIG. 9.

FIG. 9 shows the changes in the mechanical compression ratio, expansion ratio, closing timing of the intake valve 7, actual compression ratio, the amount of intake air, opening degree of the throttle valve 17, and pumping loss along with the engine load. Note that in the embodiment according to the present invention, ordinarily the average air-fuel ratio in the combustion chamber 5 is feedback controlled to the stoichiometric air-fuel ratio based on the output signal of the air-fuel ratio sensor 21 so that the three-way catalyst in the catalytic converter 20 can simultaneously reduce the unburned HC, CO, and NOₓ in the exhaust gas.

Now, as explained above, at the time of engine high load operation, the ordinary cycle shown in FIG. 8(A) is executed. Therefore, as shown in FIG. 9, at this time, since the mechanical compression ratio is made low, the expansion ratio becomes low. As shown by the solid line in low in FIG. 9, the closing timing of the intake valve 7 is advanced as shown by the solid line in FIG. 5. Further, at this time, the amount of intake air is large. At this time, the opening degree of the throttle valve 17 is maintained fully opened or substantially fully opened, so the pumping loss becomes zero.

On the other hand, as shown in FIG. 9, along with the reduction in the engine load, the mechanical compression ratio is increased, therefore the expansion ratio is also increased. Further, at this time, the closing timing of the intake valve 7 is delayed as the engine load becomes lower as shown by the solid line in FIG. 9 so that the actual compression ratio is held substantially constant. Note that at this time as well, the throttle valve 17 is held at the fully opened or substantially fully opened state. Therefore the amount of intake air fed to the combustion chamber 5 is controlled not by the throttle valve 17, but by changing the closing timing of the intake valve 7. At this time as well, the pumping loss becomes zero.

In this way when the engine load becomes lower from the engine high load operating state, the mechanical compression ratio is increased along with the fall in the amount of intake air under a substantially constant actual compression ratio. That is, the volume of the combustion chamber 5 when the piston 4 reaches compression top dead center is reduced proportionally to the reduction in the amount of intake air. Therefore the volume of the combustion chamber 5 when the piston 4 reaches compression top dead center changes proportionally to the amount of intake air. Note that at this time, the air-fuel ratio in the combustion chamber 5 becomes the stoichiometric air-fuel ratio, so the volume of the combustion chamber 5 when the piston 4 reaches compression top dead center changes proportionally to the amount of fuel.

If the engine load becomes further lower, the mechanical compression ratio is further increased. When the mechanical compression ratio reaches the limit mechanical compression ratio forming the structural limit of the combustion chamber 5, in the region of a load lower than the engine load L₁ when the mechanical compression ratio reaches the limit mechanical compression ratio, the mechanical compression ratio is held at the limit engine compression ratio. Therefore at the time of engine low load operation, the mechanical compression ratio becomes maximum, and the expansion ratio also becomes maximum. Putting this another way, in the present invention, so as to obtain the maximum expansion ratio at the time of engine low load operation, the mechanical compression ratio is made maximum. Further, at this time, the actual compression ratio is maintained at an actual compression ratio substantially the same as that at the time of engine medium and high load operation.

On the other hand, as shown by the solid line in FIG. 9, the closing timing of the intake valve 7 is delayed to the limit closing timing enabling control of the amount of intake air fed to the combustion chamber 5 as the engine load becomes lower. In the region of a load lower than the engine load L₂ when the closing timing of the intake valve 7 reaches the limit closing timing, the closing timing of the intake valve 7 is held at the limit closing timing. If the closing timing of the intake valve 7 is held at the limit closing timing, the amount of intake air will no longer be able to be controlled by the change of the closing timing of the intake valve 7. Therefore, the amount of intake air has to be controlled by some other method.

In the embodiment shown in FIG. 9, at this time, that is, in the region of a load lower than the engine load L₂ when the closing timing of the intake valve 7 reaches the limit closing timing, the throttle valve 17 is used to control the amount of intake air fed to the combustion chamber 5. However, if using the throttle valve 17 to control the amount of intake air, as shown in FIG. 9, the pumping loss increases.

Note that to prevent this pumping loss, in the region of a load lower than the engine load L₂ when the closing timing of the intake valve 7 reaches the limit closing timing, the throttle valve 17 is held in the fully opened or substantially fully opened. In that state, the lower the engine load, the larger the air-fuel ratio may be made. At this time, the fuel injector 13 is preferably arranged in the combustion chamber 5 to perform stratified combustion.

As shown in FIG. 9, at the time of engine low speed, regardless of the engine load, the actual compression ratio is held substantially constant. The actual compression ratio at this time is made the range of the actual compression ratio about at the time of engine medium and high load operation ±10 percent, preferably ±5 percent. Note that in the embodiment according to the present invention, the actual compression ratio at the time of engine low speed is made about 10±1, that is, from 9 to 11. However, if the engine speed becomes higher, the air-fuel mixture in the combustion chamber 5 is disturbed, so knocking becomes difficult, therefore in the embodiment according to the present invention, the higher the engine speed, the higher the actual compression ratio.

On the other hand, as explained above, in the superhigh expansion ratio cycle shown in FIG. 8(B), the expansion ratio is made 26. The higher this expansion ratio, the better, but if 20 or more, a considerably high theoretical thermal efficiency can be obtained. Therefore, in the present invention, the variable compression ratio mechanism A is formed so that the expansion ratio becomes 20 or more.

Further, in the example shown in FIG. 9, the mechanical compression ratio is changed continuously in accordance with the engine load. However, the mechanical compression ratio can also be changed in stages in accordance with the engine load.

On the other hand, as shown by the broken line in FIG. 9, as the engine load becomes lower, by advancing the closing timing of the intake valve 7 as well, it is possible to control the amount of intake air without depending on the throttle valve 17. Therefore, in FIG. 9, if comprehensively expressing both the case shown by the solid line and the case shown by the broken line, in the embodiment according to the present invention, the closing timing of the intake valve 7 is shifted as the engine load becomes lower in a direction away from compression bottom dead center BDC until the limit closing timing L₂ enabling control of the amount of intake air fed into the combustion chamber.

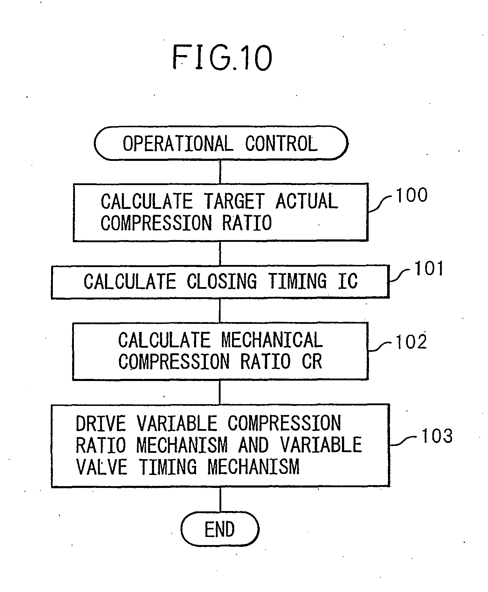

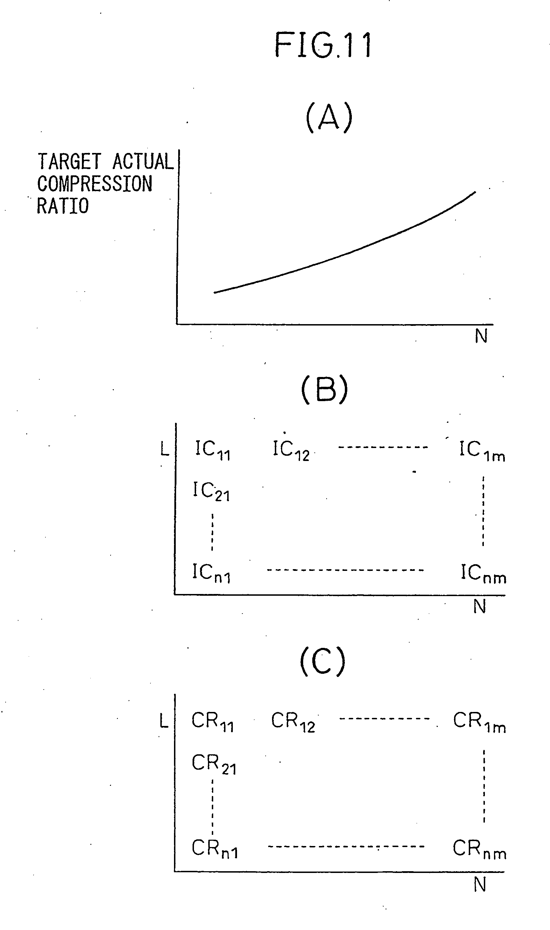

FIG. 10 shows the operation control routine. Referring to FIG. 10, first, at step 100, the map shown in FIG. 11(A) is used to calculate the target actual compression ratio. As shown in FIG. 11(A) this target actual compression ratio becomes higher the higher the engine speed N. Next, at step 101, the map shown in FIG. 11(B) is used to calculate the closing timing IC of the intake valve 7. That is, the closing timing IC of the intake valve 7 required for feeding the required amount of intake air into the combustion chamber 5 is stored as a function of the engine load L and engine speed N in the form of a map as shown in FIG. 11(B) in advance in the ROM 32. This map is used to calculate the closing timing IC of the intake valve 7.

Further, the mechanical compression ratio CR required for making the actual compression ratio the target actual compression ratio is stored as a function of the engine load L and engine speed N in the form of a map as shown in FIG. 11(C) in advance in the ROM 32. At step 102, this map is used to calculate the mechanical compression ratio CR. Next, at step 103, the mechanical compression ratio is made the mechanical compression ratio CR by controlling the variable compression ratio mechanism A, and the closing timing of the intake valve 7 is made the closing timing IC by controlling the variable valve timing mechanism B.

### LIST OF REFERENCE NOTATIONS

1... crank case
2... cylinder block
3... cylinder head
4... piston
5... combustion chamber
7... intake valve
70... intake valve drive cam shaft
A... variable compression ratio mechanism
B... variable valve timing mechanism

## Claims

1. A method of controlling a mechanical compression ratio by a variable compression mechanism (A) and controlling a start timing of an actual compression action by an actual compression action start timing changing mechanism (B) in a spark ignition type internal combustion engine, wherein an expansion ratio is made a maximum expansion ratio by making the mechanical compression ratio maximum at the time of engine low load operation and at the time of engine low speed, **characterized in that**
said maximum expansion ratio is 20 or more, and an actual compression ratio at the time of engine low load operation is made within a range of about ±10% with respect to the actual compression ratio at the time of engine medium and high load operation.

2. A method as set forth in claim 1, wherein the higher the engine speed, the higher the actual compression ratio.

3. A method as set forth in claim 1, wherein said actual compression action start timing changing mechanism is comprised of a variable valve timing mechanism able to control a closing timing of an intake valve (7).

4. A method as set forth in claim 3, wherein an amount of intake air fed into the combustion chamber (5) is controlled by changing the closing timing of the intake valve (7).

5. A method as set forth in claim 4, wherein the closing timing of the intake valve (7) is shifted as the engine load becomes lower in a direction away from compression bottom dead center until a limit closing timing enabling control of the amount of intake air fed into the combustion chamber (5).

6. A method as set forth in claim 5, wherein in a region of a load higher than the engine load when the closing timing of the intake valve (7) reaches said limit closing timing, the amount of intake air fed into the combustion chamber (5) is controlled by changing the closing timing of the intake valve (7) without depending on a throttle valve (17) provided in an engine intake passage (8, 11, 12, 14).

7. A method as set forth in claim 6, wherein in a region of a load higher than the engine load when the closing timing of the intake valve (7) reaches said limit closing timing, the throttle valve (17) is held at a fully opened state.

8. A method as set forth in claim 5, wherein in a region of a load lower than the engine load when the closing timing of the intake valve (7) reaches said limit closing timing, the amount of intake air fed into the combustion chamber (5) is controlled by a throttle valve (17) provided in an engine intake passage (8, 11, 12, 14).

9. A method as set forth in claim 5, wherein in a region of a load lower than the engine load when the closing timing of the intake valve (7) reaches said limit closing timing, the lower the load, the larger the air-fuel ratio is made.

10. A method as set forth in claim 5, wherein in a region of a load lower than the engine load when the closing timing of the intake valve (7) reaches said limit closing timing, the closing timing of the intake valve (7) is held at said limit closing timing.

11. A method as set forth in claim 1, wherein said mechanical compression ratio is increased as the engine load becomes lower to the limit mechanical compression ratio.

12. A method as set forth in claim 11, wherein in a region of a load lower than the engine load when said mechanical compression ratio reaches said limit mechanical compression ratio, the mechanical compression ratio is held at said limit mechanical compression ratio.

13. A method as set forth in any of claims 1, 2 and 5 to 9, wherein the start timing of the actual compression action is controlled by controlling a closing timing of an intake valve (7), wherein the amount of intake air fed into a combustion chamber (5) is controlled by mainly changing the closing timing of the intake valve (7).

14. A method as set forth in claim 13, wherein a throttle valve (17) is held at substantially the fully opened state when the amount of intake air is controlled mainly by changing the closing timing of the intake valve (7).

## Patentansprüche

1. Verfahren zum Steuern eines mechanischen Verdichtungsverhältnisses durch einen variablen Verdichtungsmechanismus (A) und Steuern einer Startzeit eines tatsächlichen Verdichtungsvorgangs durch einen Startzeitänderungsmechanismus (B) eines tatsächlichen Verdichtungsvorgangs in einer Funkenzündungsbrennkraftmaschine, wobei ein Expansionsverhältnis durch ein Maximieren des mechanischen Verdichtungsverhältnisses zu dem Zeitpunkt eines Niedriglastmaschinenbetriebs und zu dem Zeitpunkt einer niedrigen Maschinendrehzahl zu einem maximalen Expansionsverhältnis gemacht wird,
**dadurch gekennzeichnet, dass**
das maximale Expansionsverhältnis 20 oder mehr ist und ein tatsächliches Verdichtungsverhältnis zu dem Zeitpunkt eines Niedriglastmaschinenbetriebs innerhalb eines Bereichs von ungefähr ± 10% mit Hinblick auf das tatsächliche Verdichtungsverhältnis zu dem Zeitpunkt eines mittleren und eines hohen Maschinenlastbetriebs gemacht wird.

2. Verfahren nach Anspruch 1, wobei je höher die Maschinendrehzahl ist, desto höher das tatsächliche Verdichtungsverhältnis ist.

3. Verfahren nach Anspruch 1, wobei der Startzeitänderungsmechanismus des tatsächlichen Verdichtungsvorgangs einen variablen Ventilzeitmechanismus aufzeigt, der in der Lage ist, einen Schließzeitpunkt eines Einlassventils (7) zu steuern.

4. Verfahren nach Anspruch 3, wobei eine Einlassluftmenge, die in die Brennkammer (5) zugeführt wird, durch ein Ändern des Schließzeitpunkts des Einlassventils (7) gesteuert wird.

5. Verfahren nach Anspruch 4, wobei dann, wenn die Maschinenlast geringer wird, der Schließzeitpunkt des Einlassventils (7) in eine Richtung weg von dem unteren Verdichtungstotpunkt bis zu einem Grenzschließzeitpunkt versetzt wird, was eine Steuerung der Einlassluftmenge ermöglicht, die in die Brennkammer (5) zugeführt wird.

6. Verfahren nach Anspruch 5, wobei in einem Lastbereich höher als die Maschinenlast, wenn der Schließzeitpunkt des Einlassventils (7) den Grenzschließzeitpunkt erreicht, die Einlassluftmenge, die in die Brennkammer (5) zugeführt wird, durch Ändern des Schließzeitpunkts des Einlassventils (7) gesteuert wird, ohne von einem Drosselventil (17) abzuhängen, das in einem Maschineneinlassdurchgang (8, 11, 12, 14) vorgesehen ist.

7. Verfahren nach Anspruch 6, wobei in einem Lastbereich höher als die Maschinenlast, wenn der Schließzeitpunkt des Einlassventils (7) den Grenzschließzeitpunkt erreicht, das Drosselventil (17) in einem vollständig geöffneten Zustand gehalten wird.

8. Verfahren nach Anspruch 5, wobei in einem Lastbereich niedriger als die Maschinenlast, wenn der Schließzeitpunkt des Einlassventils (7) den Grenzschließzeitpunkt erreicht, die Einlassluftmenge, die in die Brennkammer (5) zugeführt wird, durch ein Drosselventil (17) gesteuert wird, das in einem Maschineneinlassdurchgang (8, 11, 12, 14) vorgesehen ist.

9. Verfahren nach Anspruch 5, wobei in einem Lastbereich niedriger als die Maschinenlast, wenn der Schließzeitpunkt des Einlassventils (7) den Grenzschließzeitpunkt erreicht, gilt, je niedriger die Last ist, desto höher wird das Luftkraftstoffverhältnis gemacht.

10. Verfahren nach Anspruch 5, wobei in einem Lastbereich niedriger als die Maschinenlast, wenn der Schließzeitpunkt des Einlassventils (7) den Grenzschließzeitpunkt erreicht, der Schließzeitpunkt des Einlassventils (7) an dem Grenzschließzeitpunkt gehalten wird.

11. Verfahren nach Anspruch 1, wobei das mechanische Verdichtungsverhältnis zu dem mechanischen Grenzverdichtungsverhältnis hin erhöht wird, wenn die Maschinenlast niedriger wird.

12. Verfahren nach Anspruch 11, wobei in einem Lastbereich niedriger als die Maschinenlast, wenn das mechanische Verdichtungsverhältnis das mechanische Grenzverdichtungsverhältnis erreicht, das mechanische Verdichtungsverhältnis an dem mechanischen Grenzverdichtungsverhältnis gehalten wird.

13. Verfahren nach einem der Ansprüche 1, 2 und 5 bis 9, wobei die Startzeit des tatsächlichen Verdichtungsvorgangs durch ein Steuern eines Schließzeitpunkts eines Einlassventils (7) gesteuert wird, wobei die Einlassluftmenge, die in eine Brennkammer (5) zugeführt wird, durch ein hauptsächliches Ändern des Schließzeitpunkts des Einlassventils (7) gesteuert wird.

14. Verfahren nach Anspruch 13, wobei ein Drosselventil (17) im Wesentlichen an dem vollständig geöffneten Zustand gehalten wird, wenn die Einlassluftmenge hauptsächlich durch Ändern des Schließzeitpunkts des Einlassventils (7) gesteuert wird.

## Revendications

1. Procédé de commande d'un rapport de compression mécanique par un mécanisme (A) de compression variable et de commande d'un minutage de départ d'une action de compression effective par un mécanisme (B) de changement de minutage de départ d'action de compression effective dans un moteur à combustion interne du type allumage par étincelle, où un rapport d'expansion est établi à un rapport d'expansion maximal en maximisant le rapport de compression mécanique au moment d'un fonctionnement à charge faible du moteur et au moment où la vitesse du moteur est basse, **caractérisé en ce que**
ledit rapport d'expansion maximal est de 20 ou plus, et un rapport de compression effectif au moment d'un fonctionnement à charge faible du moteur est établi dans une gamme de ± 10% environ par rapport au rapport de compression effectif au moment d'une fonctionnement à charge élevée et moyenne du moteur.

2. Procédé selon la revendication 1, dans lequel plus la vitesse du moteur est élevée, plus le rapport de compression effectif est élevé.

3. Procédé selon la revendication 1, dans lequel ledit mécanisme de changement de minutage de départ de l'action de compression effective est composé d'un mécanisme de distribution variable des soupapes capable de commander une distribution de fermeture d'une soupape d'admission (7).

4. Procédé selon la revendication 3, dans lequel une quantité d'air d'admission alimenté dans la chambre de combustion (5) est commandée en changeant la distribution de fermeture de la soupape d'admission (7).

5. Procédé selon la revendication 4, dans lequel la distribution de fermeture de la soupape d'admission (7) est décalée à mesure que la charge du moteur devient plus petite dans une direction éloignée du point mort bas de compression jusqu'à une distribution de fermeture limite permettant la commande de la quantité d'air d'admission alimenté dans la chambre de combustion (5).

6. Procédé selon la revendication 5, dans lequel dans une région d'une charge supérieure à la charge de moteur lorsque la distribution de fermeture de la soupape d'admission (7) atteint ladite distribution de fermeture limite, la quantité d'air d'admission alimenté dans la chambre de combustion (5) est commandée en changeant la distribution de fermeture de la soupape d'admission (7) indépendamment d'un papillon des gaz (17) pourvu dans un passage d'admission (8, 11, 12, 14) du moteur.

7. Procédé selon la revendication 6, dans lequel dans une région de charge supérieure à la charge de moteur lorsque la distribution de fermeture de la soupape d'admission (7) atteint ladite distribution de fermeture limite, le papillon des gaz (17) est gardé dans un état complètement ouvert.

8. Procédé selon la revendication 5, dans lequel dans une région d'une charge inférieure à la charge de moteur lorsque la distribution de fermeture de la soupape d'admission (7) atteint ladite distribution de fermeture limite, la quantité d'air d'admission alimenté dans la chambre de combustion (5) est commandée par un papillon des gaz (17) pourvu dans un passage d'admission (8, 11, 12, 14) du moteur.

9. Procédé selon la revendication 5, dans lequel dans une région d'une charge inférieure à la charge de moteur lorsque la distribution de fermeture de la soupape d'admission (7) atteint ladite distribution de fermeture limite, plus la charge est faible, plus le rapport air/carburant est grand.

10. Procédé selon la revendication 5, dans lequel dans une région d'une charge inférieure à la charge de moteur lorsque la distribution de fermeture de la soupape d'admission (7) atteint ladite distribution de fermeture limite, la distribution de fermeture de la soupape d'admission (7) est gardée au niveau de ladite distribution de fermeture limite.

11. Procédé selon la revendication 1, dans lequel ledit rapport de compression mécanique augmente à mesure que la charge du moteur devient inférieure au rapport de compression mécanique limite.

12. Procédé selon la revendication 11, dans lequel dans une région d'une charge inférieure à la charge de moteur lorsque ledit rapport de compression mécanique atteint ledit rapport de compression mécanique, le rapport de compression mécanique est gardé au niveau dudit rapport de compression mécanique limite.

13. Procédé selon l'une des revendications 1, 2 et 5 à 9, dans lequel le minutage de départ de l'action de compression effective est commandée en commandant une distribution de fermeture d'une soupape d'admission (7), où la quantité d'air d'admission alimenté dans une chambre de combustion (5) est commandée en changeant principalement la distribution de fermeture de la soupape d'admission (7).

14. Procédé selon la revendication 13, dans lequel un papillon des gaz (17) est gardé essentiellement à l'état complètement ouvert lorsque la quantité d'air d'admission est commandée en changeant principalement la distribution de fermeture de la soupape d'admission (7).
